Europäisches Patentamt

European Patent Office

Office européen des brevets

(19)

(11) **EP 0 631 812 B1**

(12) **EUROPÄISCHE PATENTSCHRIFT**

(45) Veröffentlichungstag und Bekanntmachung des Hinweises auf die Patenterteilung:
**25.02.1998 Patentblatt 1998/09**

(51) Int. Cl.[6]: **B01J 3/04**, F16K 31/12
// A23N1/00

(21) Anmeldenummer: **94109129.0**

(22) Anmeldetag: **15.06.1994**

(54) **Verfahren und Einrichtung zur Beschleunigung des Austausches von Luft oder Gas als Druckmedium**

Process and apparatus for accelerating the exchange of air or gas as pressuremedium

Procédé et dispositif pour accélérer l'échange de l'air ou de gaz comme milieu sous pression

(84) Benannte Vertragsstaaten:
**CH DE ES FR IT LI**

(30) Priorität: **29.06.1993 CH 1933/93**

(43) Veröffentlichungstag der Anmeldung:
**04.01.1995 Patentblatt 1995/01**

(73) Patentinhaber:
**BUCHER-GUYER AG Maschinenfabrik
CH-8166 Niederweningen/Zürich (CH)**

(72) Erfinder: **Hartmann, Eduard
CH-5425 Schneisingen (CH)**

(56) Entgegenhaltungen:
**CH-A- 655 862          DE-A- 3 042 951
FR-A- 2 138 264**

EP 0 631 812 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Beschleunigung des Austausches von Luft oder Gas als Druckmedium beim Entleeren eines Druckraumes, sowie einen Druckraum mit einer Einrichtung zu dessen Durchführung.

Ein solcher Druckraum kann sowohl bei der Speicherung von komprimierten Gasen als auch beim Trennen von flüssigen von festen Stoffen verwendet werden. Bekannt sind beispielsweise aus CH-A5-655'862 (Bucher-Guyer) Pressen zum Trennen fester von flüssigen Stoffen mit einem drehbar gelagerten Pressbehälter. Dieser Pressbehälter ist durch eine flexible Membran in einen Druckraum für das Gas und einen Pressraum für die auszupressende Flüssigkeit unterteilt. Dabei besitzt der Druckraum eine Einlassanordnung für Druckluft und der Pressraum weist eine Auslassanordnung für die Flüssigkeit auf.

Wird die für den Druckaufbau und Druckabbau im Druckraum erforderliche Luftmenge nur durch eine Dreheinführung bekannter Art geführt, so dauert vorallem der Druckabbau sehr lange. Bei einem Tankvolumen von 5'000 $\ell$ wurde eine Druckabbaudauer von nahezu 3 Minuten von 2 bar auf 1 bar ermittelt. An grösseren pneumatischen Pressen sind für den schnelleren Druckauf- und Abbau richtungsumschaltbare Luftinjektoren bekannt, z.B. aus CH-A5-655'862 (Bucher-Guyer). Diese benötigen mehrere Dreheinführungen und zusätzliche Steuerelemente, der Kostenaufwand ist gross.

Beim Pressen von Äpfeln werden mit einer bekannten pneumatischen Presse in 1,5 Stunden nur 15 Presszyklen erreicht. Eine Erhöhung auf 20 Presszyklen wäre mit einer Reduktion der Druckabbauzeit auf die Hälfte erreichbar.

Gemäss DE 30 42 951 A1 (Brown Boveri) ist ein Verfahren zum Ansteuern eines Sicherheitsventils an druckbelasteten Anlagen bekannt. Dabei wird ein unnötiges Ansprechen des Ventils durch Überschwingen des Druckes unterhalb eines vorgegebenen Druckwertes dadurch vermieden, dass neben den vorgegebenen Druckwerten als weiteres Kriterium der Ansteuerung zusätzlich der Druckgradient verwendet wird. Eine Verwendung von Druckgradienten zur Beschleunigung der Entleerung eines Druckraumes ist dieser Druckschrift nicht zu entnehmen.

Der Erfindung liegt deshalb die Aufgabe zugrunde, ein Verfahren zur Beschleunigung des Gasaustausches beim Entleeren eines Druckraumes anzugeben, welches sich mit einer einfachen kostengünstigen Einrichtung durchführen lässt.

Gemäss der Erfindung wird die Lösung dieser Aufgabe dadurch erreicht, dass das Entleeren zusätzlich zum Entleeren über eine Auslassanordnung teilweise über mindestens ein steuerbares, an der Wand des Druckraumes montiertes und zusammen mit dieser bewegliches Ventil erfolgt, dass das Ventil durch eine an der Wand des Druckraumes montierte und ebenfalls mit dieser bewegliche Steuerstufe angesteuert wird und dass die Steuerstufe durch eine Leitungsverbindung mit dem Druckmedium im Innern des Druckraumes autonom mit Betriebsenergie versorgt und in Abhängigkeit von der Grösse und vom zeitlichen Verlauf des Druckes des Druckmediums im Innern des Druckraumes ohne Verwendung weiterer Hilfsmittel durch die Leitungsverbindung mit dem Druckmedium direkt angesteuert wird.

Ein Druckraum mit einer Einrichtung zur Durchführung dieses Verfahrens zeichnet sich aus durch mindestens ein steuerbares, an der Wand des Druckraumes montiertes, zusammen mit dieser bewegliches und den Druckraum mit der Umgebung verbindendes Ventil und durch eine an der Wand des Druckraumes montierte und ebenfalls mit dieser bewegliche Steuerstufe zur Ansteuerung des Ventiles, wobei die Steuerstufe mit dem Druckmedium im Innern des Druckraumes durch eine Leitungsverbindung zur Energieversorgung und Ansteuerung wirkverbunden ist.

Weitere Merkmale und vorteilhafte Ausgestaltungen der Erfindung sind den Patentansprüchen zu entnehmen.

Mit einem derartigen Verfahren wird eine nach aussen autonom arbeitende Einrichtung ermöglicht, welche keine zusätzlichen Druck- Dreheinführungen erfordert. Änderungen an bereits vorhandenen Speicher programmierbaren Steuerungen werden vermieden, der Kostenaufwand, auch für eine mögliche Nachrüstung älterer Anlagen ist gering.

Ein Ausführungsbeispiel der Erfindung ist in der folgenden Beschreibung und den Figuren der Zeichnung näher erläutert. Es zeigen:

Fig. 1 ein Schema des Pressbehälters einer pneumatischen Obstpresse, dessen Druckbehälter mit einer erfindungsgemässen Steuerstufe für den Druckabbau ausgerüstet ist,

Fig. 2 die Steuerstufe mit dem durch diese gesteuerten Auslassventil gemäss Fig. 1 im Einzelnen,

Fig. 3 ein Diagramm des Druckverlaufes im Druckbehälter gemäss Fig. 1, und

Fig. 4 ein Ablaufschema des Druckabbaues im Druckbehälter gemäss Fig. 1.

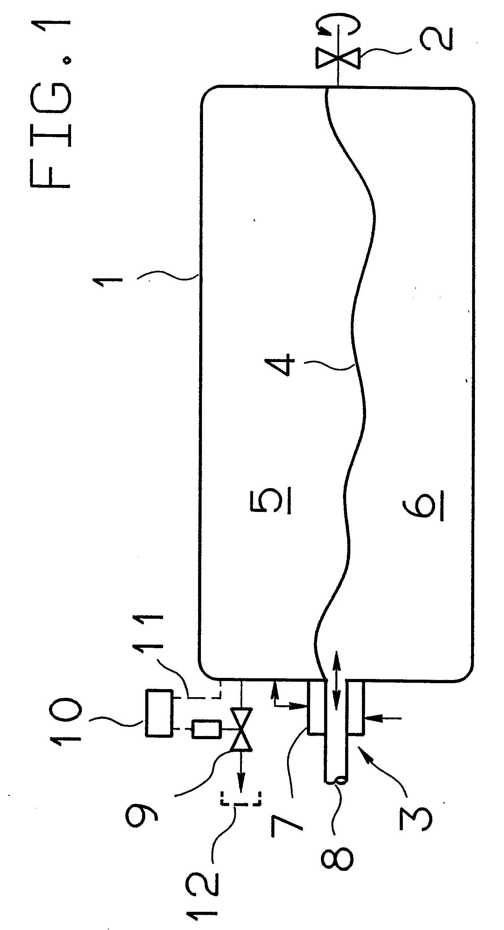

Fig. 1 zeigt im Schnitt einen um seine Längsachse drehbaren Pressbehälter 1 von zylindrischer Form, welcher auf Lagern 2 und 3 gelagert ist. Eine flexible Membran 4 ist im Pressbehälter 1 an dessen Wand längs einer Linie befestigt, welche in einer durch die Drehachse gehenden Ebene liegt. Die Membran 4 teilt das Innere des Pressbehälters 1 in einen Druckraum 5 und einen Pressraum 6. Der Druckraum 5 ist mit einer Einlassanordnung in Form einer Dreheinführung 7 für Druckluft versehen, und der Pressraum 6 weist eine Ein- und Auslassanordnung 8 in Form einer Hohlachse für das zu pressende Gut und die ausgepresste Flüssigkeit auf.

Neben der Einlassanordnung 8 ist an der Stirnwand des Pressbehälters 1 zusätzlich ein Auslassventil 9 für die Druckluft im Druckbehälter 5 montiert. Dieses Ventil 9 wird durch eine Steuerung 10 geöffnet oder geschlossen. Die Steuerung 10 wird erfindungsgemäss über eine Leitung 11 durch die Druckluft im Innern des Druckraumes 5 betätigt. Das Ventil 9 ist mit einem Schalldämpfer 12 versehen.

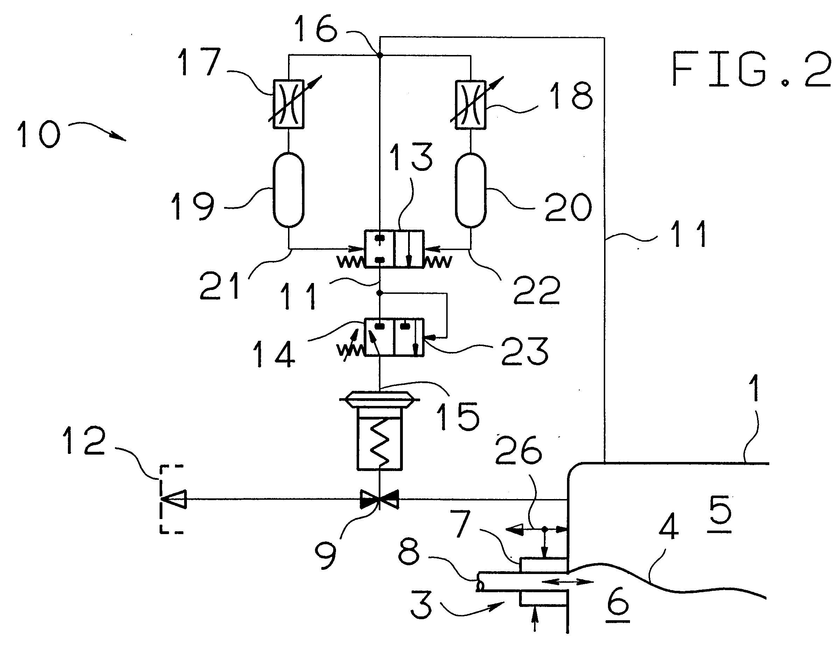

In Fig. 2 tragen die zu Fig. 1 beschriebenen Bauteile die schon erwähnten Bezugszeichen. Die Steuerung 10 ist hier im Einzelnen dargestellt. Die Leitung 11 ist mit dem Druckraum 5 verbunden und führt die darin enthaltene Druckluft über zwei 2- Wegeventile 13, 14 auf den Steuereingang 15 des Ventiles 9. Von der Leitung 11 gelangt die Druckluft über eine Verzweigung 16 zusätzlich über je eine Drossel 17, 18 zu je einem Druckspeicherbehälter 19, 20. Die Druckspeicherbehälter 19, 20 sind über Leitungen 21, 22 mit zwei Steuereingängen des 2- Wegeventiles 13 verbunden. Ein Steuereingang 23 des zweiten 2- Wegeventiles 14 ist mit der Leitung 11 vom 2- Wegeventil 13 her verbunden.

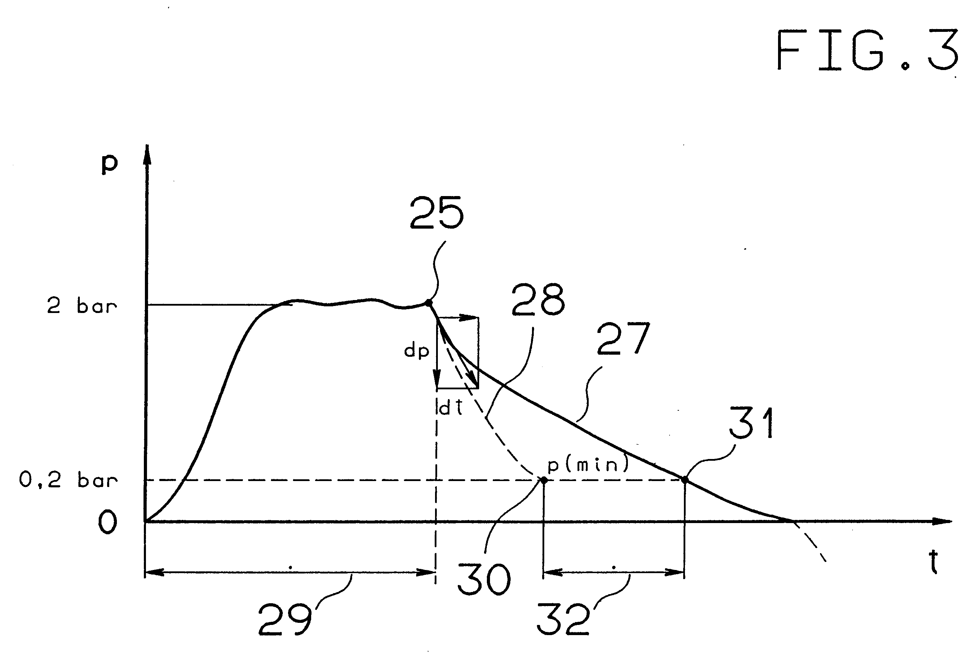

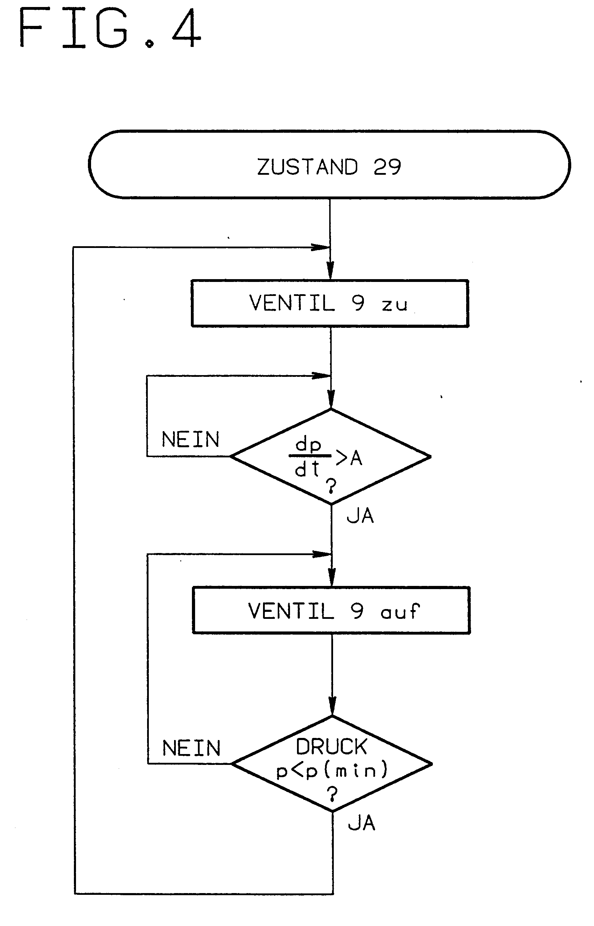

Die Funktion der soweit beschriebenen Einrichtung wird anhand der Diagramme der Fig. 3 und 4 wie folgt erkärt. Fig. 3 zeigt den Druckverlauf im Druckraum 5 über der Zeit im Verlauf eines Presszyklus. Für jede Füllung der Presse erfolgen in an sich bekannter Weise eine Mehrzahl solcher Presszyklen zur Verbesserung der Ausbeute. Durch Zuführung der Druckluft über die Dreheinführung 7 in den Druckraum 5 steigt hier, wie Fig. 3 zeigt, der Druck zunächst bis zu einem Arbeiswert, z.B. 2 bar. Dabei ist die Leitung 11 am Ventil 13 unterbrochen, und die Druckspeicherbehälter 19, 20 werden über die Verzweigung 16 und die Drosseln 17, 18 auf den gleichen Arbeitswert mit aufgefüllt. Weil die Öffnung von Drossel 17 grösser ist als jene von Drossel 18, erhält der Behälter 19 beim Druckanstieg die höheren Druckwerte früher als Behälter 20, das Ventil 13 verbleibt in der gezeichneten Position mit Unterbrechung der Leitung 11.

Ist der Arbeitswert von 2 bar im Druckraum 5 erreicht, so bleiben die Druckwerte an den Steuereingängen des Ventils 13 über die Leitungen 21, 22 einander gleich, und das Ventil 13 verbleibt weiterhin in der gezeichneten Position mit Unterbrechung der Leitung 11. Im Punkt 25 von Fig. 3 wird nun ein Druckabfall dp/dt < 0 eingeleitet, z.B. über die Dreheinführung 7 oder durch einen manuellen Druckablass 26 in Fig. 2. Ohne die erfindungsgemässe Einrichtung mit Ventil 9 und Steuerstufe 10 würde der Druckverlauf im Druckraum 5 der Kurve 27 in Fig. 3 folgen. Übersteigt der Betrag des Druckabfalles |dp/dt| einen am Ventil 13 einstellbaren Wert A, so ergibt sich infolge der unterschiedlichen Strömungswiderstände der Drosseln 17, 18 eine Differenz der Drücke in den Behältern 19, 20 und daher auch an den Steuereingängen des Ventils 13.

Das Ventil 13 schaltet nun durch. Der Steuereingang 23 des zweiten 2- Wegeventils 14 erhält den Druck über die Leitung 11, sodass auch Ventil 14 durchschaltet. Das Ventil 9 wird über dessen Steuereingang 15 geöffnet, und der Druckraum 5 erhält einen zusätzlichen Auslass. Damit folgt der Druckverlauf dem schnelleren Abfall 28, welchen Fig. 3 als unterbrochene Linie zeigt. Fällt der Druck im Druckraum 5 und am Steuereingang 23 von Ventil 14 unter einen Grenzwert p (min), z.B. 0,2 bar, so schliesst Ventil 14 und damit Ventil 9, Punkt 30 in Fig. 3 ist erreicht, und der Druckabbau im Druckraum 5 ist beendet. Die Steuerstufe 10 kehrt in den Ausgangszustand zurück, welcher dem in Fig. 3 mit 29 bezeichneten Bereich entspricht. Fig. 4 zeigt das Ablaufschema des soweit beschriebenen Druckabbaus.

Wie in Fig. 3 dargestellt, würde ohne die beschriebene Steuereinrichtung die Kurve 27 den Grenzwert p(min) des Druckes erst im Punkt 31 erreichen. Es ergibt sich also die mit 32 bezeichnete Zeiteinsparung für den Druckabbau im Druckraum 5.

Neben dem beschriebenen Ausführungsbeispiel erlaubt die Erfindung noch weitere vorteilhafte Varianten. So kann man Grösse und zeitlichen Verlauf des Druckes im Druckraum mit einem elektrischen Sensor in elektrische Signale wandeln und dieselben in einer mit elektrischen Bauelementen aufgebauten Steuerstufe verarbeiten. Will man das Auslassventil 9 nicht durch den Druck im Druckraum 5 über die Leitung 11 ansteuern, so lässt sich für diese Steuerung auch eine unabhängige Speisedruckquelle verwenden. Deren Druck wird durch ein signalgesteuertes 2- Wegeventil auf das Ventil 9 geschaltet, wobei das Steuersignal mit einem Differezierglied erzeugt wird, welches auf den Druckabfall im Druckraum 5 anspricht. Zur weiteren Beschleunigung des Druckabfalls kann man anstelle des einen Ventils 9 am gleichen Druckraum 5 deren mehrere montieren, welche alle vom gleichen Signal gesteuert sind. Das oder die steuerbaren Ventile und die Steuerstufe zu deren Betrieb sind, soweit es deren Baugrösse nahelegt, im Innern des Druckraumes anzuordnen.

**Patentansprüche**

1. Verfahren zur Beschleunigung des Austausches von Luft oder Gas als Druckmedium beim Entleeren eines Druckraumes (5), dadurch **gekennzeichnet**, dass das Entleeren zusätzlich zum Entleeren über eine Auslassanordnung (7, 26) teilweise über mindestens ein steuerbares, an der Wand (1) des Druckraumes (5) montiertes und zusammen mit dieser bewegliches Ventil (9) erfolgt, dass das Ventil (9) durch eine an der Wand (1) des Druckraumes (5) montierte und ebenfalls mit dieser bewegliche Steuerstufe (10) angesteuert wird und dass die Steuerstufe (10) durch eine Leitungsverbindung (11) mit dem Druckmedium im Innern des Druckraumes (5) autonom mit Betriebsenergie versorgt und in Abhängigkeit von der Grösse und vom zeitlichen Verlauf des Druckes des Druckmediums im Innern des Druckraumes (5) ohne Verwendung weiterer Hilfsmittel durch die Leitungsverbindung (11) mit dem Druckmedium direkt angesteuert wird.

2. Verfahren nach Anspruch 1, bei welchem der Druckraum (5) einer Einrichtung zum Trennen von flüssigen und festen Stoffen mit einem drehbar gelagerten Pressbehälter (1), der durch eine flexible Membran (4) in einen Druckraum (5) und einen Pressraum (6) unterteilt ist, als Druckraum angehört, wobei der Druckraum (5) eine Einlassanordnung (7) für das Druckmedium und der Pressraum (6) eine Auslassanordnung (8) für die abzutrennenden flüssigen Stoffe aufweist und das Trennen durch mindestens einen Presszyklus und einen Auflockerungszyklus der festen Stoffe erfolgt, dadurch **gekennzeichnet**, dass das steuerbare Ventil (9) durch die Steuerstufe (10) bei Beginn des Presszyklus (29) bei ansteigendem Druck im Druckraum (5) geschlossen gehalten wird, am Ende des Presszyklus (29) bei Druckabfall oberhalb eines Schwellwertes (A) geöffnet und bei Erreichen eines Minimaldruckes wieder geschlossen wird.

3. Verfahren nach Anspruch 1, dadurch **gekennzeichnet**, dass die Steuerstufe (10) direkt mit dem Druckmedium im Innern des Druckraumes (5) beaufschlagt wird.

4. Verfahren nach Anspruch 3, dadurch **gekennzeichnet**, dass die Steuerstufe (10) ausschliesslich mit der Energie des Druckmediums als Betriebsenergie betrieben wird.

5. Verfahren nach Anspruch 1, dadurch **gekennzeichnet**, dass der Steuerstufe die Grösse und der zeitliche Verlauf des Druckes des Druckmediums im Innern des Druckraumes (5) mittels elektrischer Signale zugeführt und diese Signale in der Steuerstufe mittels elektrischer Bauelemente verarbeitet werden.

6. Druckraum (5) mit einer Einrichtung zur Beschleunigung des Austausches von Luft oder Gas als Druckmedium beim Entleeren des Druckraumes (5) über eine Auslassanordnung (7, 26), **gekennzeichnet** durch mindestens ein steuerbares, an der Wand (1) des Druckraumes montiertes, zusammen mit dieser bewegliches und den Druckraum (5) mit der Umgebung verbindendes Ventil (9) und durch eine an der Wand (1) des Druckraumes (5) montierte und ebenfalls mit dieser bewegliche Steuerstufe (10) zur Ansteuerung des Ventiles (9), wobei die Steuerstufe (10) mit dem Druckmedium im Innern des Druckraumes (5) durch eine Leitungsverbindung (11) zur Energieversorgung und Ansteuerung wirkverbunden ist.

7. Druckraum nach Anspruch 6, dadurch **gekennzeichnet**, dass das Ventil (9) ein federbelastetes Klappenventil ist, und dass die Steuerstufe (10) aufgebaut ist aus einem ersten pneumatisch betätigten 2- Wegeventil (13) mit zwei Steueranschlüssen (21, 22), zwei Druckspeicherbehältern (19, 20), welche einerseits über je eine Drossel (17, 18) mit verschieden grossen Durchgangsöffnungen mit dem Druckmedium im Innern des Druckraumes (5) und andererseits mit je einem Steueranschluss (21, 22) des ersten 2- Wegeventils (13) verbunden sind, und einem zweiten 2- Wegeventil (14), auf welches das Druckmedium vom Druckraum (5) vom ersten 2- Wegeventil (13) mittels einer Leitung (11) durchschaltbar ist und welches seinerseits dieses Druckmedium nur bei Überschreitung eines Minimaldruckes (p(min)) auf den Steuereingang (15) des Klappenventiles (9) durchschaltet.

8. Druckraum nach Anspruch 7, dadurch **gekennzeichnet**, dass die Durchschalt- Schwelle des Minimaldruckes am zweiten 2- Wegeventil (14) einstellbar ist.

9. Druckraum nach Anspruch 6, dadurch **gekennzeichnet**, dass die Steuerstufe ein Differenzierglied umfasst, welches bei Druckabfall innerhalb des Druckraumes oberhalb eines Schwellwertes ein Ausgangssignal erzeugt, welches über ein 2- Wegeventil mit Hilfe einer vom Druck innerhalb des Druckraumes unabhängigen Speisedruckquelle das steuerbare Ventil öffnet.

10. Druckraum nach Anspruch 9, dadurch **gekennzeichnet**, dass der Druck der Speisedruckquelle dem zusammen mit dem Druckraum beweglichen steuerbaren Ventil über eine Drehzuführung zugeführt ist.

11. Druckraum nach Anspruch 6, dadurch **gekennzeichnet**, dass mehrere steuerbare, an der Wand des Druckraumes montierte, zusammen mit dieser bewegliche und den Druckraum mit der Umgebung verbindende Ventile vorhanden sind.

12. Druckraum nach einem der Ansprüche 6-11, dadurch **gekennzeichnet**, dass die steuerbaren, an der Wand des Druckraumes montierten, zusammen mit dieser beweglichen und den Druckraum mit der Umgebung verbindenden Ventile umgebungsseitig Schalldämpfer aufweisen.

13. Druckraum nach einem der Ansprüche 6-11, dadurch **gekennzeichnet**, dass das mindestens eine steuerbare, an der Wand (1) des Druckraumes (5) montierte, zusammen mit dieser bewegliche und den Druckraum (5) mit der Umgebung verbindende Ventil (9) und die an der Wand (1) des Druckraumes (5) montierte und ebenfalls mit dieser bewegliche Steuerstufe (10) zur Ansteuerung des Ventiles (9) mindestens teilweise im Innern des Druckraumes (5) angeordnet sind.

## Claims

1. Process for accelerating the exchange of air or gas as the pressure medium when evacuating a pressure chamber (5), characterised in that evacuation is effected not only by means of an outlet arrangement (7, 26), but also partially by means of at least one controllable valve (9) mounted on the wall (1) of the pressure chamber (5) and movable together therewith, that the valve (9) is controlled by a control module (10) mounted on the wall (1) of the pressure chamber (5) and also movable together therewith and that the control module (10) is supplied autonomously with energy by means of a line connection (11) to the pressure medium in the interior of the pressure chamber (5) and is controlled directly by means of the line connection (11) to the pressure medium without using further aids as a function of the magnitude and the variation of the pressure of the pressure medium in the interior of the pressure chamber (5) with time.

2. Process according to claim 1, in which the pressure chamber (5) is part of a means for separating liquid and solid substances with a rotatably mounted pressing container (1) which is divided into a pressure chamber (5) and a pressing chamber (6) by means of a flexible membrane (4), the pressure chamber (5) having an inlet arrangement (7) for the pressure medium and the pressing chamber (6) having an outlet arrangement (8) for the liquid substances to be separated off and separation being effected by means of at least one pressing cycle and a loosening cycle for loosening the solid substances, characterised in that the controllable valve (9) is held closed by the control module (10) at the beginning of the pressing cycle (29) as the pressure in the pressure chamber (5) increases, is opened at the end of the pressing cycle (29) when the drop in pressure exceeds a threshold value (A) and is closed again when a minimum pressure is reached.

3. Process according to claim 1, characterised in that the pressure medium in the interior of the pressure chamber (5) acts directly on the control module (10).

4. Process according to claim 3, characterised in that the control module (10) is operated exclusively by the energy of the pressure medium.

5. Process according to claim 1, characterised in that the magnitude and the variation of the pressure of the pressure medium in the interior of the pressure chamber (5) with time are fed to the control module by means of electric signals and these signals are processed in the control module by means of electrical components.

6. Pressure chamber (5) with a means for accelerating the exchange of air or gas as the pressure medium when evacuating the pressure chamber (5) by means of an outlet arrangement (7, 26), characterised by at least one controllable valve (9) mounted on the wall (1) of the pressure chamber, movable together therewith and connecting the pressure chamber (5) to the surrounding atmosphere and by a control module (10) for controlling the valve (9) mounted on the wall (1) of the pressure chamber (5) and also movable together therewith, the control module (10) being operatively connected to the pressure medium in the interior of the pressure chamber (5) by means of a line connection (11) for energy supply and control.

7. Pressure chamber according to claim 6, characterised in that the valve (9) is a spring-loaded flap valve and that the control module (10) is assembled from a first pneumatically operated 2-way valve (13) with two control ports (21, 22), two pressure tanks (19, 20) connected, on the one hand, by means of respective throttles (17, 18) with through openings of different sizes to the pressure medium in the interior of the pressure chamber (5) and, on the other hand, to respective control ports (21, 22) of the first 2-way valve (13), and a second 2-way valve (14) to which the pressure medium of the pressure chamber (5) can be connected through from the first 2-way valve (13) by means of a line (11) and which in turn connects this pressure medium through to the control input (15) of the flap valve (9) only when a minimum pressure (p(min)) is exceeded.

8. Pressure chamber according to claim 7, characterised in that the through-connection threshold of the minimum pressure at the second 2-way valve (14) is adjustable.

9. Pressure chamber according to claim 6, characterised in that the control module includes a differential element which generates an output signal when the drop in pressure within the pressure chamber exceeds a threshold value, thereby opening the controllable valve by means of a 2-way valve with the aid of a supply pressure source independent of the pressure within the pressure chamber.

10. Pressure chamber according to claim 9, characterised in that the pressure of the supply pressure source is fed by means of a rotating inlet to the controllable valve movable together with the pressure chamber.

11. Pressure chamber according to claim 6, characterised by a plurality of controllable valves mounted on the wall of the pressure chamber, movable together therewith and connecting the pressure chamber to the surrounding atmosphere.

12. Pressure chamber according to one of claims 6-11, characterised in that the controllable valves mounted on the wall of the pressure chamber, movable together therewith and connecting the pressure chamber to the surrounding atmosphere are provided on the surrounding atmosphere side with sound absorbers.

13. Pressure chamber according to one of claims 6-11, characterised in that the at least one controllable valve (9) mounted on the wall (1) of the pressure chamber (5), movable together therewith and connecting the pressure chamber (5) to the surrounding atmosphere and the control module (10) for controlling the valve (9) mounted on the wall (1) of the pressure chamber (5) and also movable together therewith are arranged at least partially in the interior of the pressure chamber (5).

**Revendications**

1. Procédé pour accélérer l'échange d'air ou de gaz, servant de milieu de pression, lors de l'évacuation d'une chambre de pression (5), **caractérisé** en ce que l'évacuation s'effectue partiellement, en plus de l'évacuation à travers un dispositif de sortie (7, 26), à travers au moins une soupape (9) pouvant être commandée, montée sur la paroi (1) de la chambre de pression (5) et déplaçable ensemble avec celle-ci, que la soupape (9) est commandée par un étage de commande (10) monté sur la paroi (1) de la chambre de pression (5) et également déplaçable conjointement avec celle-ci, et que l'étage de commande (10) est alimenté de façon autonome en énergie de fonctionnement à travers une canalisation de liaison (11) avec le milieu de pression à l'intérieur de la chambre de pression (5) et est piloté directement par le milieu de pression, à travers la canalisation de liaison (11), en fonction de l'ampleur et de la variation dans le temps de la pression du milieu de pression à l'intérieur de la chambre de pression (5), sans utilisation d'autres moyens auxiliaires.

2. Procédé selon la revendication 1, selon lequel la chambre de pression (5) fait partie, en tant que chambre de pression, d'un dispositif pour séparer des matières liquides et des matières solides, dispositif qui comprend un récipient de pressage (1) monté rotatif et partagé par une membrane flexible (4) en une chambre de pression (5) et une chambre de pressage (6), la chambre de pression (5) présentant un dispositif d'admission (7) pour le milieu de pression et la chambre de pressage (6) présentant un dispositif de sortie (8) pour les matières liquides à séparer, et la séparation s'effectuant par au moins un cycle de pressage et un cycle de désaggrégation ou d'émiettage des matières solides, **caractérisé** en ce que la soupape (9), pouvant être commandée, est maintenue fermée par l'étage de commande (10) au début du cycle de pressage (29), pendant la montée de la pression dans la chambre de pression (5), ouverte à la fin du cycle de pressage (29), pendant la chute de la pression, au-dessus d'un seuil (A), et refermée lorsqu'une pression minimale est atteinte.

3. Procédé selon la revendication 1, **caractérisé** en ce que l'étage de commande (10) est soumis directement au milieu de pression se trouvant à l'intérieur de la chambre de pression (5).

4. Procédé selon la revendication 3, **caractérisé** en ce que l'étage de commande (10) est actionné exclusivement par l'énergie du milieu de pression comme énergie pour le fonctionnement.

5. Procédé selon la revendication 1, **caractérisé** en ce que l'ampleur et la variation dans le temps de la pression du milieu de pression à l'intérieur du chambre de pression (5) sont communiquées à l'étage de commande au moyen de signaux électriques et ces signaux sont traités dans l'étage de commande au moyen de composants électriques.

6. Chambre de pression (5) pourvue d'un dispositif pour accélérer l'échange d'air ou de gaz, servant de milieu de pression, lors de l'évacuation de la chambre de pression (5) à travers un dispositif de sortie (7, 26), **caractérisée** par au moins une soupape (9), pouvant être commandée, montée sur la paroi (1) de la chambre de pression et déplaçable conjointement avec elle, soupape qui relie la chambre de pression (5) à l'environnement, ainsi que par un étage de commande (10) pour commander la soupape (9), qui est monté sur la paroi (1) de la chambre de pression (5) et également déplaçable conjointement avec elle, l'étage de commande (10) étant relié fonctionnellement au milieu de pression se trouvant à l'intérieur de la chambre de pression (5) par une canalisation de liaison (11) pour l'alimentation en énergie et le pilotage de l'étage de commande (10).

7. Chambre de pression selon la revendication 6, **caractérisée** en ce que la soupape (9) est une soupape à clapet chargée par ressort et que l'étage de commande (10) est constitué d'une première soupape à deux voies (13) à pilotage pneumatique, présentant deux raccords de pilotage (21, 22), de deux accumulateurs de pression (19, 20) qui communiqent d'une part, à travers des étrangleurs (17, 18) respectifs ayant des orifices de passage de différentes grandeurs, avec le milieu de pression à l'intérieur de la chambre de pression (5) et d'autre part avec des raccords de pilotage (21, 22) respectifs de la première soupape à deux voies (13), et d'une seconde soupape à deux voies (14), à laquelle le milieu de pression de la chambre de pression (5) est transmissible par la première soupape à deux voies (13) au moyen d'une canalisation (11) et qui transmet elle-même ce milieu de pression à l'entrée de commande (15) de la soupape à clapet (9) seulement en cas de dépassement d'une pression minimale (p(min)).

8. Chambre de pression selon la revendication 7, **caractérisée** en ce que le seuil de transmission de la pression minimale est réglable sur la seconde soupape à deux voies (14).

9. Chambre de pression selon la revendication 6, **caractérisée** en ce que l'étage de commande comprend un organe différenciateur qui, s'il se produit dans la chambre de presssion une chute de pression supérieure à un seuil, génère un signal de sortie qui ouvre la soupape pouvant être commandée, par l'intermédiaire d'une soupape à deux voies et à l'aide d'une source de pression d'alimentation qui est indépendante de la pression à l'intérieur de la chambre de pression.

10. Chambre de pression selon la revendication 9, **caractérisée** en ce que la pression de la source de pression d'alimentation est appliquée à travers une amenée rotative à la soupape pouvant être commandée et déplaçable conjointement avec la chambre de pression.

11. Chambre de pression selon la revendication 6, **caractérisée** par la prévision de plusieurs soupapes pouvant être commandées, montées sur la paroi de la chambre de pression, déplaçables conjointement avec celle-ci et reliant la chambre de pression à l'environnement.

12. Chambre de pression selon une des revendications 6 - 11, **caractérisée** en ce que les soupapes pouvant être commandées, montées sur la paroi de la chambre de pression, déplaçables conjointement avec celle-ci et reliant la chambre de pression à l'environnement, présentent des silencieux du côté de l'environnement.

13. Chambre de pression selon une des revendications 6 - 11, **caractérisée** en ce que la ou les soupape(s) (9) pouvant être commandée(s), montée(s) sur la paroi (1) de la chambre de pression (5), déplaçable(s) conjointement avec celle-ci et reliant la chambre de pression (5) à l'environnement, de même que ledit étage de commande (10) pour commander la ou les soupape(s) (9), monté sur la paroi (1) de la chambre de pression (5) et également déplaçable conjointement avec celle-ci, sont disposés au moins partiellement à l'intérieur de la chambre de pression (5).

FIG.1

EP 0 631 812 B1

FIG.2

EP 0 631 812 B1

FIG.3

# FIG.4

```
           ┌──────────────────────┐
           │      ZUSTAND 29       │
           └──────────┬───────────┘
                      │
         ┌────────────┤
         │            ▼
         │     ┌──────────────┐
         │     │  VENTIL 9 zu │
         │     └──────┬───────┘
         │            │
         │   ┌────────┤
         │   │        ▼
         │   │      ◇ dp/dt > A ?
   NEIN ─┤───┘      
         │            │ JA
         │   ┌────────┤
         │   │        ▼
         │   │  ┌──────────────┐
         │   │  │ VENTIL 9 auf │
         │   │  └──────┬───────┘
         │   │         ▼
   NEIN ─┤───┘      ◇ DRUCK p<p(min) ?
         │            │ JA
         └────────────┘
```

ZUSTAND 29

VENTIL 9 zu

$\dfrac{dp}{dt} > A$ ?   NEIN / JA

VENTIL 9 auf

DRUCK $p < p(min)$ ?   NEIN / JA